# DEMANDE DE BREVET EUROPEEN

(11) **EP 2 999 102 A2**
(43) Date de publication de la demande: **23.03.2016**
(21) Numéro de dépôt: 15184624.3
(22) Date de dépôt: 10.09.2015
(51) Int. Cl.: H02K 21/24, H02K 21/04, H02K 19/10, H02K 19/24, H02K 16/00

(54) **MACHINE ELECTRIQUE TOURNANTE COMPORTANT AU MOINS UN STATOR ET AU MOINS DEUX ROTORS**

(30) Priorité: 18.09.2014 FR 1458838
(71) Demandeur: Moteurs Leroy-Somer, 16915 Angouleme (FR)
(72) Inventeur: SAINT-MICHEL, Jacques, 16000 ANGOULEME (FR)
(74) Mandataire: Nony

(57) **Abrégé**

La présente invention concerne une machine électrique tournante (10) comportant au moins un stator (20) et au moins deux rotors (40), lesquels sont disposés de part et d'autre du stator (20) le long d'un axe de rotation (X) de la machine,
- ledit au moins un stator (20) comportant des dents (21) et des bobinages (22) disposés sur les dents, et
- chacun desdits au moins deux rotors (40) comportant deux armatures rotoriques coaxiales (42a, 42b) l'une avec l'autre, portant chacune des griffes disposées pour venir interagir magnétiquement avec les dents (21) du stator, les griffes d'une armature étant disposées circonférentiellement en alternance avec les griffes de l'autre armature.

## Description

La présente invention concerne le domaine des machines électriques tournantes, et plus particulièrement celui des machines électriques tournantes à flux axial.

Par « flux axial », il faut comprendre que le flux est orienté dans l'entrefer ménagé entre le rotor et le stator selon une direction parallèle à un axe de rotation de la machine, par contraste avec une machine dite à flux radial, dans laquelle le flux circule entre le rotor et le stator selon une direction perpendiculaire à l'axe de rotation de la machine.

On connait des machines à griffes à flux radial, par exemple par les brevets US 7 791 244, US 7 608 972, US 7 466 057.

L'invention concerne aussi bien les alternateurs que les moteurs.

L'invention s'intéresse plus particulièrement aux machines électriques tournantes comportant un bobinage d'excitation, et dont le flux inducteur peut être ajusté selon les besoins par l'intermédiaire d'un courant continu réglable qui l'alimente.

L'invention a ainsi pour objet une machine électrique tournante comportant au moins un stator et au moins deux rotors, lesquels sont disposés de part et d'autre du stator le long d'un axe de rotation de la machine,
- ledit au moins un stator comportant des dents et des bobinages disposés sur les dents, et
- chacun desdits au moins deux rotors comportant deux armatures rotoriques cylindriques et coaxiales l'une avec l'autre, portant chacune des griffes disposées pour venir interagir magnétiquement avec les dents du stator, notamment avec passage du flux magnétique selon une direction parallèle à l'axe de rotation de la machine, les griffes d'une armature étant disposées circonférentiellement en alternance avec les griffes de l'autre armature.

Les griffes font de préférence face aux dents du stator selon l'axe de rotation de la machine. Ainsi, le flux magnétique est orienté dans l'entrefer ménagé entre le rotor et le stator selon une direction sensiblement parallèle à l'axe de rotation de la machine.

« Disposées circonférentiellement en alternance » signifie que lorsque l'on se déplace circonférentiellement autour de l'axe de rotation de la machine, on rencontre successivement une griffe attachée à une armature rotorique cylindrique d'un rotor, puis une griffe attachée à l'autre armature rotorique cylindrique du même rotor, laquelle est coaxiale à la première armature.

### Stator

Les bobinages du stator sont de préférence chacun bobinés autour d'un axe de bobinage parallèle à l'axe de rotation de la machine.

Les dents du stator peuvent chacune être de forme générale sensiblement prismatique, comportant par exemple, en section transversale prise perpendiculairement à l'axe de rotation de la machine, deux portions de cercles concentriques reliés par deux rayons. Les bobinages du stator peuvent être de forme correspondante. Les dents du stator présentent une face avant faisant face aux griffes de chacun des rotors. Lesdites faces sont de préférence planes et s'étendent perpendiculairement à l'axe de rotation de la machine. Le stator peut comporter au moins 6 dents, par exemple 6, 8 ou 12 dents, voire plus encore.

Les dents du stator peuvent être rattachées à une armature statorique annulaire Les dents peuvent être réalisées d'un seul tenant avec cette armature statorique annulaire, ou en variante être maintenues dessus par tout moyen tel que par exemple collage, soudage, vissage, assemblage, par exemple par queues d'aronde, cette liste n'étant pas limitative.

Les dents peuvent être formées d'un empilage de tôles, maintenues solidaires entre elles par tout moyen tel que par exemple collage, encliquetage, rivetage et rattachées à l'armature statorique annulaire par exemple par vissage. Les tôles peuvent être empilées selon un axe d'empilement perpendiculaire à l'axe de rotation de la machine. Le découpage des dents dans l'empilement de tôles peut être conçu de manière à réduire les pertes en matériau. Il est par exemple effectué avec les dents orientées tête-bêche, de manière à éviter les chutes. A coût équivalent, on peut utiliser pour réaliser les dents un matériau magnétique plus coûteux, par exemple de meilleure qualité et plus performant.

Les dents peuvent également être réalisées dans un matériau isotrope, tel que par exemple des poudres magnétiques agglomérées par frittage ou collage, ou grâce à l'apport de métal selon les procédés dits d'impression 3D.

L'armature statorique annulaire est de préférence amagnétique. Elle est par exemple réalisée en aluminium. Ainsi, le stator peut être dépourvu de culasse magnétique, ce qui est moins coûteux. En variante, l'armature statorique annulaire n'est pas amagnétique.

Les dents sont configurées de telle manière qu'elles peuvent dépasser d'un côté seulement ou de part et d'autre de l'armature statorique annulaire d'une distance *d*, laquelle peut être comprise entre 10 et 200 % de la hauteur h de la dent mesurée selon un rayon de la machine.

Les dents du stator peuvent porter chacune deux bobinages disposés sur la dent correspondante de part et d'autre de l'armature statorique annulaire, chacun des deux bobinages faisant face à l'un des deux rotors. Les dents du stator peuvent notamment être rattachées par leur milieu à ladite armature statorique annulaire. Les deux demi-dents résultantes peuvent être de même taille, de même que les bobinages qu'elles portent.

Le stator peut être symétrique par rapport à un plan perpendiculaire à l'axe de rotation de la machine.

Les bobinages peuvent être bobinés sur un support destiné à être lui-même enfilé sur la dent correspondante. Ce support est de préférence réalisé en matière isolante électrique, par exemple en matière plastique.

Le stator est de préférence à bobinage concentré, c'est-à-dire bobiné sur dents. Le bobinage du stator est multiphasé. Le nombre de phases peut être d'au moins 3, étant par exemple égal à 3, ou supérieur à 3, par exemple de 5, 7, 11, 13, ou 17, voire plus encore.

Les conducteurs électriques des bobinages du stator peuvent être disposés dans le bobinage correspondant « en vrac », ou au contraire en étant « rangés ». Les bobinages peuvent être réalisés sous forme d'enroulements répartis, étant par exemple répartis en multi-étages, avec un nombre de couches pair quelconque. Une telle configuration peut être favorable à la réduction des harmoniques d'espace liés à la distribution des bobinages, comme on le pratique souvent dans les machines de topologies classiques.

Les conducteurs électriques des bobinages du stator peuvent être réalisés avec des fils de section transversale circulaire, ou oblongue, le conducteur étant alors appelé « fil méplat ». Les fils utilisés peuvent être isolés à basse tension, étant émaillés voire même émaillés guipés, ou à moyenne tension, étant isolés par du papier de mica par exemple, voire encore à très haute tension, étant par exemple réalisés avec du câble à haute tension.

Le refroidissement des bobinages peut être réalisé par le gaz contenu dans la machine, par exemple de l'air, en convection forcée par exemple, ou non, ou en variante par un liquide circulant dans des serpentins inclus de manière appropriée dans les bobinages, voire dans les fils eux-mêmes des bobinages, lesquels peuvent être alors réalisés avec des conducteurs électriques creux.

Ledit au moins un stator peut être dépourvu de griffes, contrairement aux rotors. Cela peut être également le cas pour tous les stators de la machine, le cas échéant.

### Rotor

Chacun des rotors peut comporter une bobine d'excitation toroïdale disposée entre les deux armatures rotoriques cylindriques et coaxiales. Cette bobine d'excitation permet de générer un flux magnétique dans les armatures rotoriques cylindriques et coaxiales et dans les griffes qui font face au stator. Cette bobine d'excitation est coaxiale à l'axe de rotation de la machine. Un avantage de cette configuration est qu'une seule bobine suffit pour alimenter tous les pôles d'une même polarité, d'où un coût réduit pour la machine.

En outre, une machine à excitation dite globale, c'est-à-dire comportant une bobine d'excitation unique pour l'ensemble des pôles, présente l'avantage d'être moins consommatrice de matériaux conducteurs qu'une machine à excitation répartie telle qu'une machine à pôles saillants ou à rotor lisse.

Ainsi, la machine selon l'invention permet de cumuler les avantages des machines à excitation dite globale à ceux des machines à flux axial. La machine selon l'invention est à la fois compacte et puissante.

La bobine d'excitation peut être fixe par rapport au stator. Autrement dit, la bobine d'excitation n'est pas entraînée en rotation, quand les armatures rotoriques cylindriques et les griffes le sont. Ainsi, l'alimentation du rotor en est facilitée. Aucun système d'alimentation tournant n'est nécessaire. Dans l'invention, la présence de bobines d'excitation fixes facilite leur alimentation, laquelle peut être effectuée directement depuis une source extérieure, telle qu'une batterie, un réseau auxiliaire, ou soutirage des bornes de la machine, cette liste n'étant pas limitative. Le courant d'excitation peut être ajusté par un dispositif électronique fixe adéquat.

Chacun des rotors peut comporter en outre un anneau ferromagnétique fixe disposé de manière à être traversé radialement par le flux magnétique inducteur. La bobine d'excitation est rendue solidaire de cet anneau ferromagnétique.

Chacun des rotors peut comporter deux entrefers rotoriques auxiliaires, chacun des entrefers rotoriques auxiliaires étant ménagé respectivement entre l'anneau ferromagnétique dudit rotor et l'une des armatures rotoriques cylindriques. Le flux magnétique circulant dans ledit rotor traverse les deux entrefers rotoriques auxiliaires de manière radiale. Les deux entrefers rotoriques auxiliaires sont chacun de forme cylindrique et sont coaxiaux l'un par rapport à l'autre.

En variante, la bobine d'excitation peut être entraînée en rotation. Dans ce cas, on supprime les entrefers rotoriques auxiliaires, et la bobine est solidaire des armatures cylindriques rotoriques. Les performances de la machine peuvent en être améliorées. Cependant, il faut utiliser par exemple des balais, ou une machine tournante d'excitation pour l'alimentation de la bobine d'excitation.

Chacune des armatures cylindriques d'un rotor peut comporter un nombre de griffes égal à la moitié du nombre de pôles de la machine. Par « nombre de pôle de la machine », on entend le nombre de griffes total d'un rotor faisant face au stator que l'on rencontre lorsque l'on se déplace circonférentiellement autour de l'axe de la machine. Le nombre de pôles peut être supérieur ou égal à 4. Il peut notamment être de 4, 6 ou 8, voire plus encore. Dans une variante de réalisation, le nombre de pôles de la machine est de 4.

Les griffes rattachées à une même armature rotorique cylindrique peuvent être de même polarité. Toutes les griffes d'une même polarité d'un rotor peuvent être rattachées à une même armature rotorique cylindrique. Toutes les griffes de polarité nord d'un rotor peuvent être rattachées à une première armature rotorique cylindrique. Toutes les griffes de polarité sud d'un rotor peuvent être rattachées à une deuxième armature rotorique cylindrique.

Les deux rotors entourant le stator peuvent être angulairement décalés l'un par rapport à l'autre. Une telle configuration peut permettre de réduire les ondulations de couple et permettre l'annulation d'une harmonique d'espace ou de minimiser un ensemble choisi d'harmoniques d'espace.

Au moins un rotor, mieux chacun des deux rotors, voire tous les rotors de la machine, peuvent être dépourvus d'aimants permanents. Le ou les rotors, voire tous les rotors de la machine, sont bobinés. Par « rotor bobiné », on désigne un rotor comportant au moins une bobine dans laquelle peut circuler un courant électrique susceptible de créer un champ magnétique lorsque le rotor est en rotation. Ce champ magnétique circule dans l'anneau ferromagnétique du rotor, dans les armatures rotoriques cylindriques et coaxiales et dans les griffes de ces dernières.

La machine selon l'invention peut être dépourvue d'aimants permanents, comme explicité ci-dessus. Néanmoins, dans une variante de réalisation de l'invention, la machine comporte des aimants permanents, notamment des aimants permanents disposés entre les griffes des rotors, afin de permettre de minimiser les fuites de flux magnétique. Ces aimants présentent une direction d'aimantation circonférentielle par rapport à l'axe de rotation.

La structure des armatures cylindriques coaxiales du rotor permet d'atteindre des vitesses de rotation élevées. On peut par exemple atteindre une vitesse périphérique du rotor de l'ordre de 150 m/s sans employer de précaution particulière.

La machine comporte en outre un arbre entraîné en rotation autour de l'axe de rotation de la machine, qui supporte les armatures rotoriques cylindriques et coaxiales des rotors, ainsi que les griffes qu'elles portent.

Cet arbre est solidaire des rotors, et repose par au moins un palier, par exemple un ou deux paliers, sur un carter de la machine, notamment un ou deux flasque(s) d'extrémité de la machine.

Les deux rotors peuvent être entièrement symétriques ou sensiblement symétriques l'un par rapport à l'autre, par rapport à un plan perpendiculaire à l'axe de rotation de la machine. Le léger manque de symétrie peut par exemple provenir du nombre de paliers portant l'arbre de la machine. Les rotors peuvent en particulier être symétriques l'un par rapport à l'autre pour ce qui concerne la partie magnétique, à savoir les armatures rotoriques cylindriques et coaxiales, les griffes, les bobines d'excitation toroïdales et les anneaux ferromagnétiques, non compris un éventuel décalage angulaire.

Les rotors peuvent comporter encore, afin de renforcer la structure de la machine, chacun deux ossatures coaxiales permettant d'améliorer la transmission mécanique et le centrage sur l'arbre. L'une peut être disposée entre les deux armatures rotoriques cylindriques et l'autre à l'intérieur de l'armature rotorique cylindrique la plus intérieure, c'est-à-dire entre l'armature rotorique cylindrique intérieure et l'arbre de la machine. Ces ossatures peuvent être non magnétiques, par exemple en aluminium, afin de ne pas perturber la circulation du flux magnétique. L'ossature la plus extérieure, à savoir celle disposée entre les deux armatures rotoriques cylindriques, peut permettre une meilleure cohésion de la machine, qui est alors dite renforcée.

Au moins l'un ou plusieurs des éléments des rotors, choisis parmi les griffes, les armatures rotoriques cylindriques, les anneaux ferromagnétiques, peuvent être en tout ou en partie réalisés au moyen d'un ou plusieurs matériaux magnétiques massifs, par exemple choisi parmi : fonte grise, fonte à graphite sphéroïdal, matériaux composites magnétiques doux, autrement appelés SMC (*soft magnetic composites*), acier moulé, acier forgé, cette liste n'étant pas limitative.

En variante ou additionnellement, l'un ou plusieurs des éléments des rotors, choisis parmi les griffes, les armatures rotoriques cylindriques, les anneaux ferromagnétiques, peuvent être en tout ou en partie feuilletés, étant réalisés par un empilement de tôles magnétiques. Les griffes des rotors peuvent notamment être feuilletées, étant réalisées par un empilement de tôles magnétiques.

Le refroidissement des bobines d'excitation du rotor peut être réalisé de la même manière que celui des bobinages du stator, dans la mesure où les bobines d'excitation du rotor sont fixes et peuvent donc avantageusement être refroidies par circulation de fluide, liquide ou gaz. Ainsi, le refroidissement peut être réalisé par le gaz contenu dans la machine, par exemple de l'air, en convection forcée par exemple, ou non, ou en variante par un liquide circulant dans des serpentins inclus de manière appropriée dans les bobines, voire dans les fils eux-mêmes des bobines, lesquels peuvent être alors réalisés avec des conducteurs creux.

### Machine

La machine selon l'invention peut constituer un moteur. Dans le cas d'un moteur, le nombre de pôles de la machine peut être d'au moins 8, étant par exemple de 8 ou 12. Un des intérêts d'une telle machine est sa compacité.

En variante, la machine peut également constituer un générateur. Dans ce cas, elle peut comporter 4 ou 6 pôles par exemple. Dans une variante de réalisation, la machine comporte par exemple 4 pôles et 6 dents.

La machine peut être rendue étanche. On peut y ménager un vide partiel, par exemple inférieur à 0,3 bar, voire y introduire un gaz léger, par exemple de l'hydrogène ou de l'hélium. Cela peut permettre de minimiser les pertes aérauliques, et ainsi de permettre le fonctionnement à des vitesses plus élevées, par exemple supérieures à 150 m/s en vitesse périphérique du rotor.

La ventilation de la machine peut être forcée, par aspiration d'air dans la machine. Cette aspiration peut se faire par le milieu de la machine, compte tenu de sa structure avec deux rotors disposés de part et d'autre du stator.

L'invention a encore pour objet une machine électrique tournante comportant plusieurs machines telles que décrites plus haut, constituées chacune d'un stator et de deux rotors, disposées sur un axe de rotation commun. Une telle machine comporte par exemple deux ensembles constitués chacun d'un stator et de deux rotors, voire plus encore, par exemple trois ou quatre ensembles, ou même plus, en fonction de la puissance électrique ou mécanique recherchée.

L'invention a notamment pour objet une machine comportant trois machines selon l'invention, constituées chacune d'un stator et de deux rotors disposés sur un axe de rotation commun, dans laquelle les bobinages des stators sont triphasés, avec une phase par stator.

L'invention sera mieux comprise à la lecture de la description détaillée qui va suivre, d'exemples de réalisation non limitatifs de celle-ci, et à l'examen du dessin annexé, sur lequel :
- la figure 1 est une vue en perspective d'une machine réalisée conformément à l'invention,
- les figures 2 et 3 sont des vues en perspective éclatées de la machine de la figure 1,
- la figure 4 en est une vue plus détaillée,
- les figures 5 et 6 sont des vues en coupe longitudinale, respectivement à l'état assemblé ramassé et éclaté, de la machine des figures 1 à 4,
- les figures 7 et 8 sont des vues respectivement à l'état assemblé et éclaté, des parties rotatives de la machine des figures 1 à 6,
- la figure 9 en est une vue éclatée en coupe longitudinale,
- les figures 10 et 11 sont des vues en coupe longitudinale, respectivement à l'état assemblé et éclaté, des parties fixes de la machine des figures 1 à 9,
- la figure 12 est une vue en perspective du stator de la machine des figures 1 à 11,
- la figure 13 en est une vue éclatée,
- la figure 14 illustre un procédé de fabrication des dents du stator,
- la figure 15 est une vue en perspective d'une variante de réalisation à deux paliers,
- la figure 16 est une vue à l'état assemblé en coupe longitudinale,
- la figure 17 est une vue en perspective éclatée de la machine des figures 15 et 16,
- la figure 18 en est une vue plus détaillée,
- la figure 19 est une vue en perspective d'une variante de réalisation à deux paliers et à aspiration centrale,
- la figure 20 en est une coupe longitudinale,
- la figure 21 est une vue en perspective éclatée de la machine des figures 19 et 20,
- la figure 22 est une vue en perspective d'une variante de réalisation à deux paliers, à aspiration centrale et à cohésion renforcée,
- la figure 23 en est une coupe longitudinale, et
- la figure 24 en est une vue de détail.

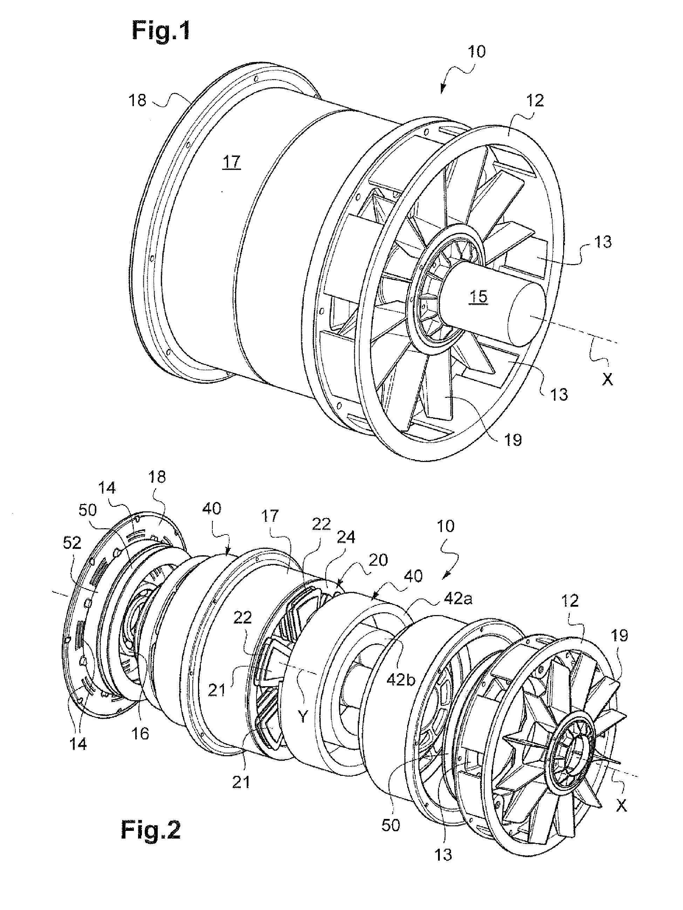

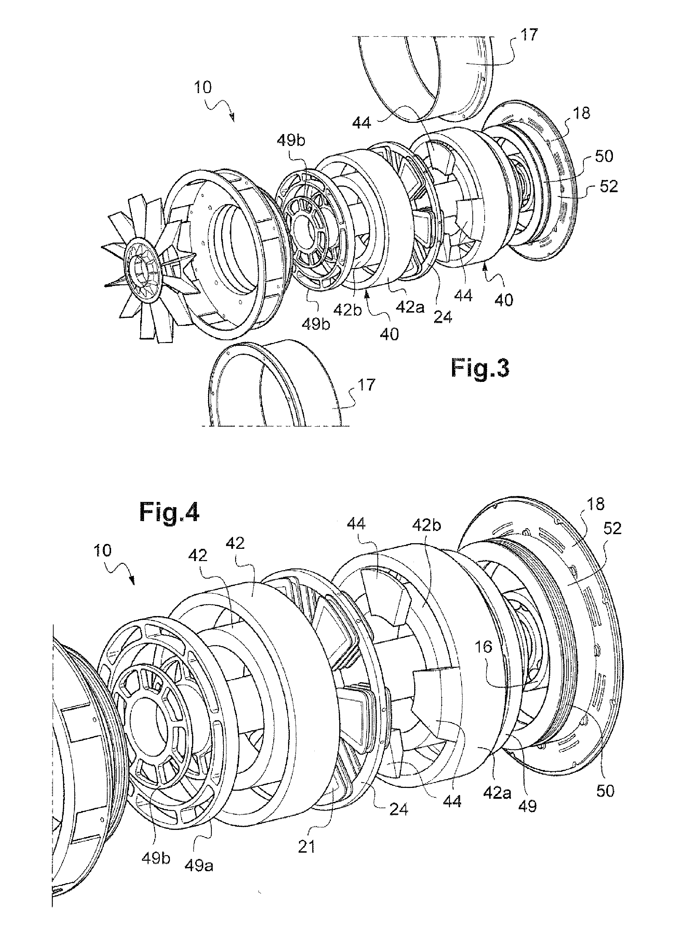

On a illustré aux figures 1 à 13 une machine électrique tournante 10 conforme à l'invention, comportant un stator 20 et deux rotors 40, disposés respectivement de part et d'autre du stator 20 le long de l'axe de rotation X de la machine.

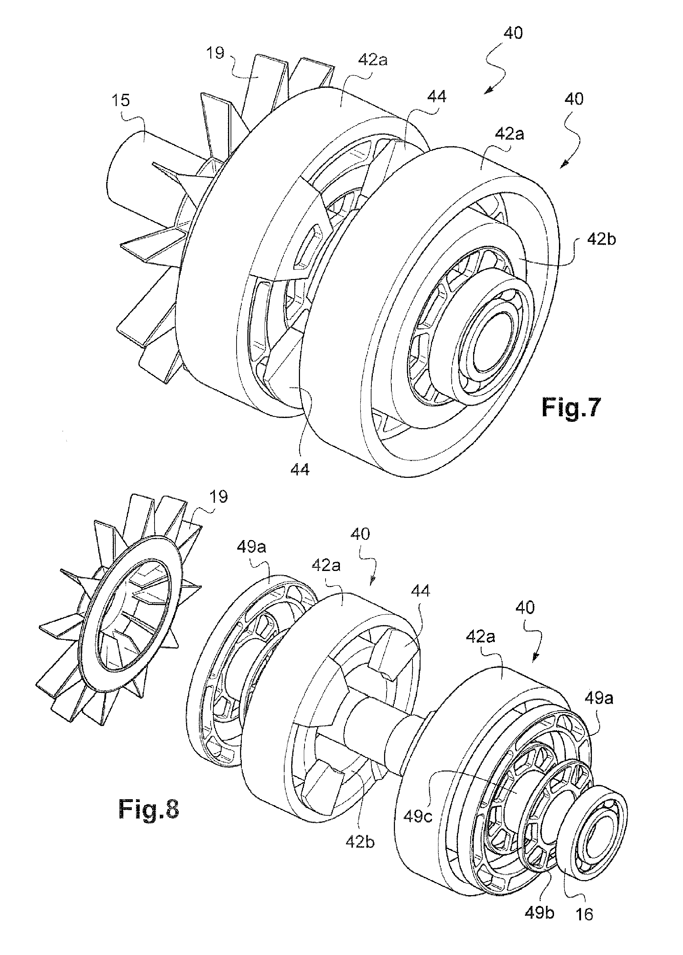

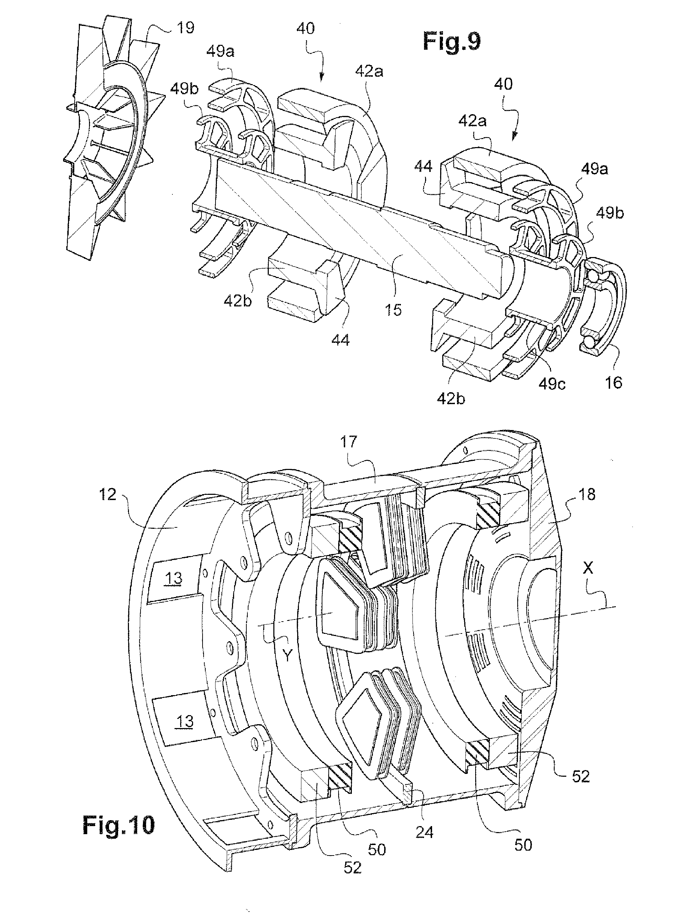

On a illustré aux figures 7 à 9 les parties rotatives de la machine, et aux figures 10 à 13 les parties fixes.

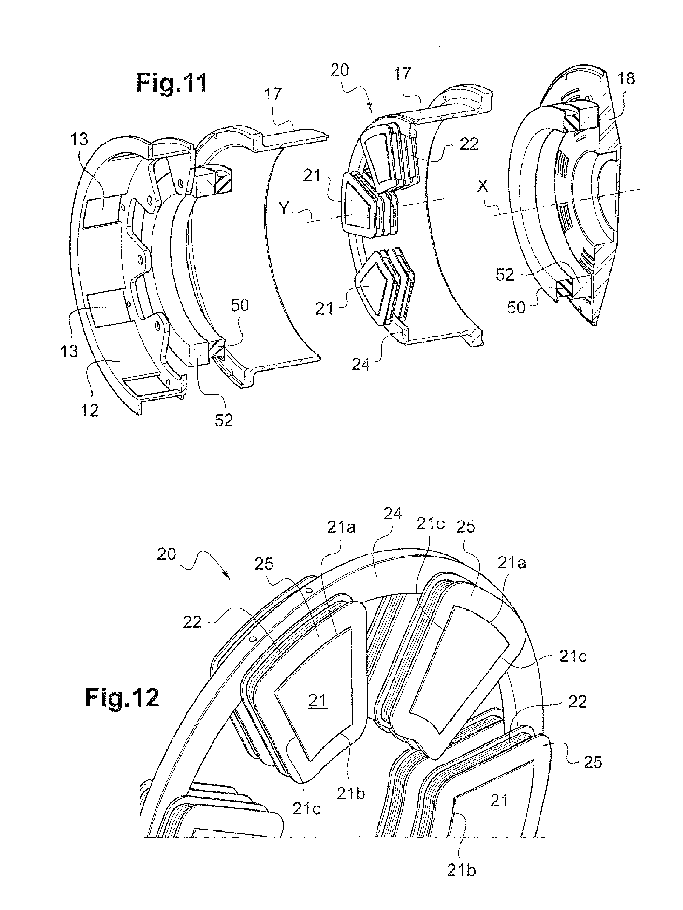

Le stator comporte des dents 21 et des bobinages 22 disposés sur les dents 21. Comme on peut le voir notamment sur la figures 11, les bobinages 22 sont chacun bobinés autour d'un axe de bobinage Y parallèle à l'axe de rotation X de la machine.

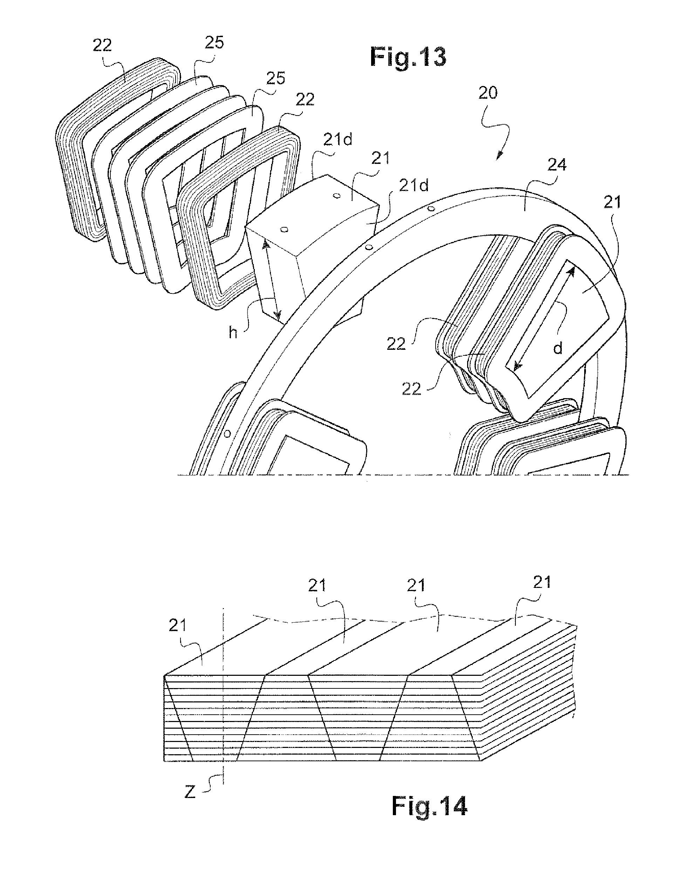

Les dents 21 du stator 20 comportent chacune deux demi-dents. Chaque demi-dent porte un bobinage 22. Les deux demi-dents sont disposées de part et d'autre d'une armature statorique annulaire 24, chacun des deux bobinages faisant face à l'un des deux rotors 40. Les demi-dents sont par exemple rattachées par leur milieu à l'armature 24, par exemple par vissage. On voit sur la figure 13 les trous de passage des vis, orientés radialement. Les deux demi-dents sont de même taille, de même que les bobinages qu'elles portent. Le stator est ainsi symétrique par rapport à un plan médian pour le stator, perpendiculaire à l'axe de rotation X de la machine. Chaque bobinage est bobiné sur un support 25 disposé sur la demi-dent correspondante. Ce support 25 est de préférence réalisé en matière isolante électrique, par exemple en matière plastique. Dans l'exemple décrit, l'armature statorique annulaire 24 est amagnétique.

Les dents 21 sont configurées de telle manière qu'elles dépassent d'un côté de l'armature statorique annulaire 24 d'une distance *d,* laquelle est dans l'exemple illustré à la figure 13 égale à 100% de la hauteur *h* de la dent mesurée selon un rayon de la machine. Cette distance *d* peut être comprise entre 10 et 200 % de la hauteur *h* de la dent. En variante, les dents pourraient dépasser radialement de part et d'autre de l'armature statorique annulaire sans que l'on sorte du cadre de l'invention.

Les dents 21 sont délimitées lorsqu'observées selon l'axe X par deux portions de cercles concentriques 21a et 21b reliées par deux rayons 21c. Les bobinages 22 sont de forme correspondante. Les dents 21 présentent deux faces principales 21d faisant chacune face à un rotor 40. Les faces 21d sont planes et s'étendent perpendiculairement à l'axe de rotation X de la machine. Le stator comporte dans l'exemple décrit 6 dents, mais pourrait en comporter 8 ou 12, voire plus encore.

Les dents 21 peuvent être formées d'un empilage de tôles, maintenues solidaires entre elles par tout moyen. Les tôles peuvent être empilées selon un axe d'empilement Z perpendiculaire à l'axe de rotation X de la machine. Le découpage des dents 21 dans l'empilement de tôles peut être réalisé de manière à éviter ou à tout le moins minimiser les pertes. Il peut être effectué avec les dents obtenues tête-bêche, de manière à ne provoquer aucune ou très peu de chutes, comme illustré sur la figure 14.

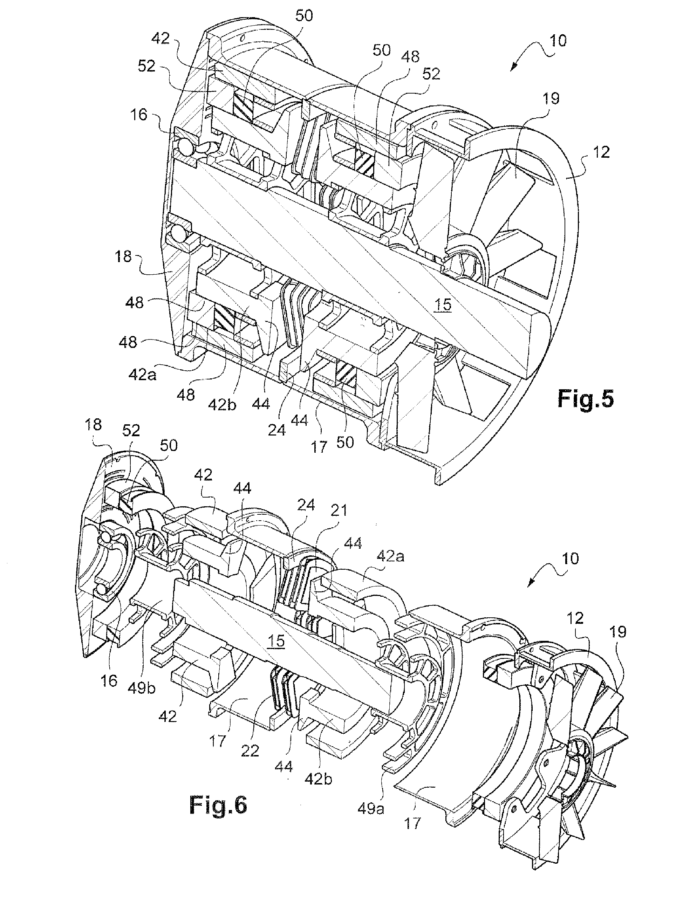

Chacun des deux rotors 40 comporte deux armatures rotoriques 42a et 42b cylindriques et coaxiales l'une avec l'autre, portant chacune des griffes 44 disposées axialement face aux dents 21 du stator 20, comme on peut le voir notamment à la figure 5. Les griffes 44 d'un rotor font face aux dents 21. Les griffes 44 d'une première armature 42a sont disposées circonférentiellement en alternance avec les griffes 44 de la deuxième armature 42b. Autrement dit, lorsque l'on se déplace circonférentiellement autour de l'axe de rotation X de la machine, on rencontre successivement une griffe 44 attachée à la première armature rotorique cylindrique 42a d'un rotor, puis une griffe 44 attachée à la deuxième armature rotorique cylindrique 42b du même rotor.

Chacun des rotors 40 comporte en outre, comme on peut le voir sur les figures 6 et 10 notamment, une bobine d'excitation toroïdale 50 disposée entre les deux armatures rotoriques 42a et 42b cylindriques et coaxiales. Cette bobine d'excitation 50 permet de générer un flux magnétique dans les armatures rotoriques 42a et 42b cylindriques et coaxiales et dans les griffes 44 qui font face au stator 20. Cette bobine d'excitation 50 est coaxiale à l'axe de rotation X de la machine.

Dans l'exemple décrit, la bobine d'excitation 50 est fixe par rapport au stator 20. La bobine d'excitation n'est pas entraînée en rotation, quand les armatures rotoriques cylindriques 42a et 42b et les griffes 44 le sont.

Chacun des rotors 40 comporte en outre un anneau ferromagnétique 52 également fixe, disposé de manière à être traversé radialement par le flux magnétique inducteur. La bobine d'excitation 50 est solidaire de cet anneau ferromagnétique 52.

Deux entrefers rotoriques auxiliaires 48 sont ménagés respectivement entre l'anneau ferromagnétique 52 du rotor et l'une des armatures rotoriques cylindriques 42a ou 42b. Le flux magnétique circulant dans le rotor traverse les deux entrefers rotoriques auxiliaires 48 de manière radiale. Les deux entrefers rotoriques auxiliaires 48 sont coaxiaux.

Dans l'exemple décrit, chacune des armatures cylindriques d'un rotor 40 comporte deux griffes, les rotors étant à 4 pôles. Le nombre de griffes est égal à la moitié du nombre de pôles de la machine. Le nombre de pôles peut en variante être supérieur à 4. Il peut notamment être de 6 ou 8, voire plus encore.

Les rotors comportent encore avantageusement chacun, comme visible notamment sur la figure 8, afin de renforcer la structure de la machine, deux ossatures coaxiales 49a et 49b permettant d'améliorer la transmission mécanique et le centrage sur l'arbre 15. L'une 49a est disposée entre les deux armatures rotoriques cylindriques 42a et 42b, étant adjacente à la bobine d'excitation 50 et prend la forme de deux roues coaxiales reliées par des portions de rayons. L'autre 49b est disposé à l'intérieur de l'armature rotorique cylindrique intérieure 42b, c'est-à-dire entre l'armature rotorique cylindrique 42b intérieure et l'arbre 15 de la machine, et prend la forme de deux disques disposées côte-à-côte comportant chacun deux roues coaxiales reliées par des rayons, les deux disques adjacents étant reliés par une virole centrale 49c maintenue sur l'arbre 15 entre les deux disques adjacents.

Ces ossatures 49a et 49b peuvent être non magnétiques, par exemple en aluminium, afin de ne pas perturber la circulation du flux magnétique. L'ossature 49a la plus extérieure, à savoir celle disposée entre les deux armatures rotoriques cylindriques, peut permettre une meilleure cohésion de la machine.

Les deux rotors entourant le stator sont dans l'exemple décrit disposés face à face, étant non décalés angulairement l'un par rapport à l'autre. Les rotors pourraient aussi être angulairement décalés l'un par rapport à l'autre.

La machine 10 comporte un arbre 15 solidaire des rotors 40, lequel repose par un palier 16 sur un carter 17 de la machine, notamment un flasque d'extrémité 18 de la machine 10, visible sur la figure 6.

La machine comporte également, disposé sur l'arbre 15 à l'opposé du flasque d'extrémité 18, un ventilateur 19 logé dans une virole 12, entraînée par l'arbre 15. La virole 12 comporte des ajours 13 permettant la sortie de l'air, lequel peut pénétrer dans la machine par des grilles 14 ménagées dans le flasque d'extrémité 18.

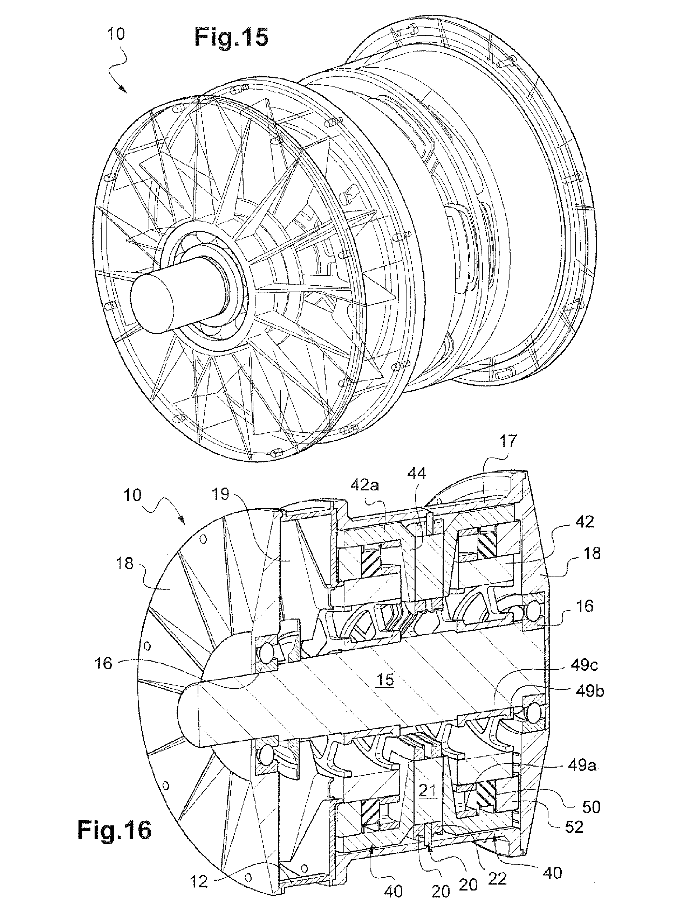

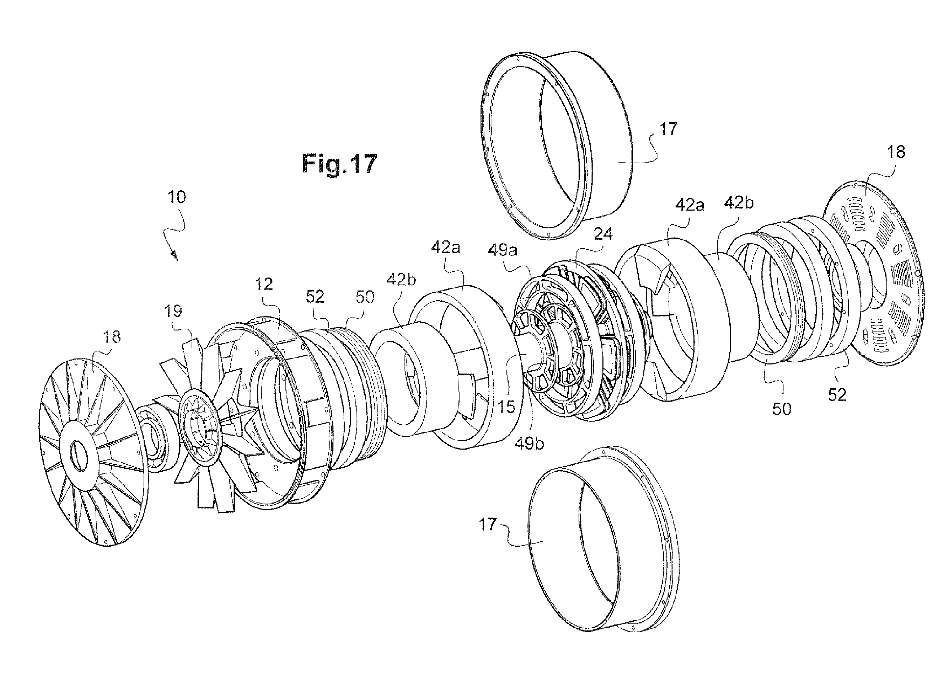

Dans une variante de réalisation illustrée aux figures 15 à 18, et comme visible plus particulièrement sur la figure 16, l'arbre 15 repose par des roulements 16 sur le carter 17 de la machine, et plus particulièrement sur les deux flasques d'extrémité 18 de la machine 10.

Dans ce cas de figure, la virole 12 logeant le ventilateur 19 est fermée du côté opposé aux rotors et au stator par le deuxième flasque d'extrémité 18. De ce fait, la machine est légèrement asymétrique, cette asymétrie étant due à la présence du ventilateur 19 d'un côté de la machine.

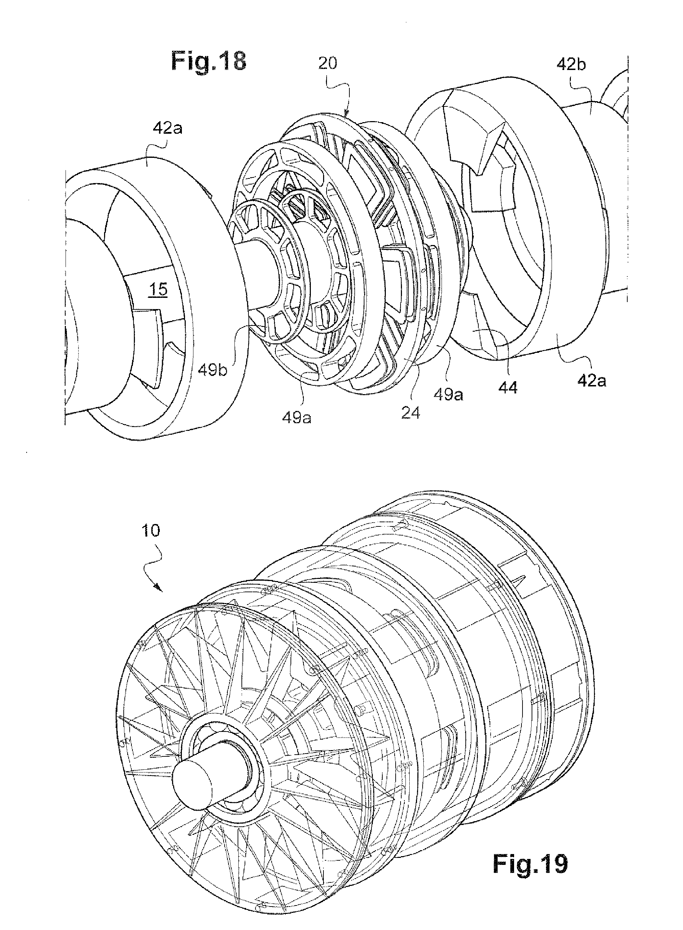

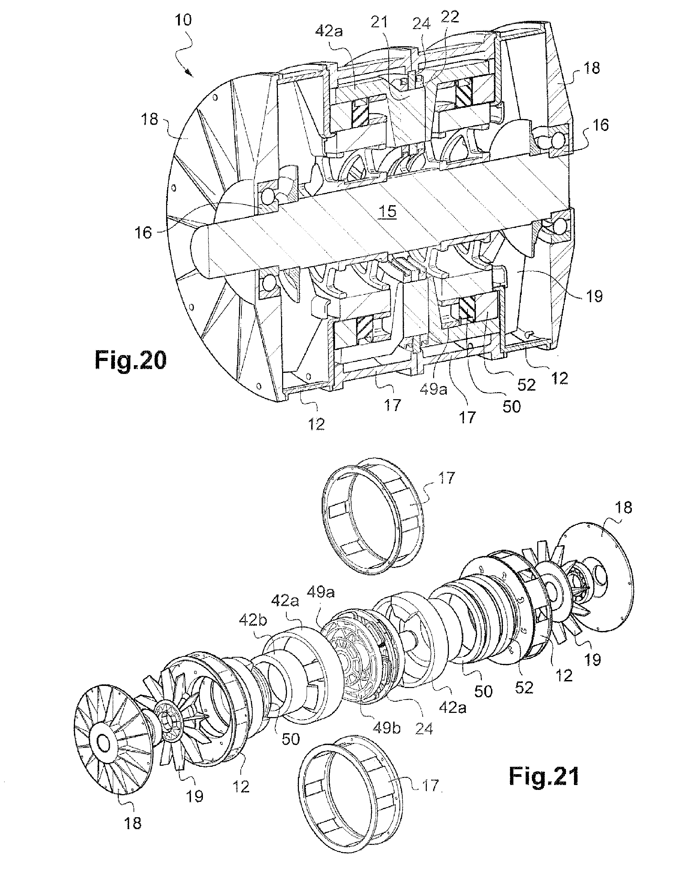

Dans une autre variante de réalisation illustrée aux figures 19 à 21, le carter 17 comporte deux ventilateurs 19 disposés à chacune des extrémités de la machine, dans des viroles 12 fermées chacune par un flasque d'extrémité 18. En outre, le carter 17 comporte des ajours 17a, permettant l'entrée de l'air dans la machine par son centre, puis la circulation de l'air à l'intérieur de la machine pour son refroidissement, et sa sortie par les ajours 13 des viroles 12 de part et d'autre de la machine, de manière symétrique.

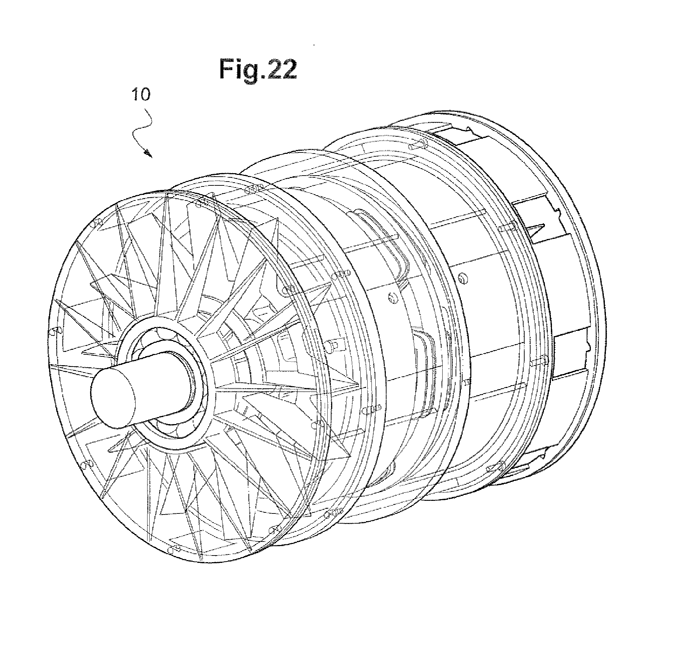

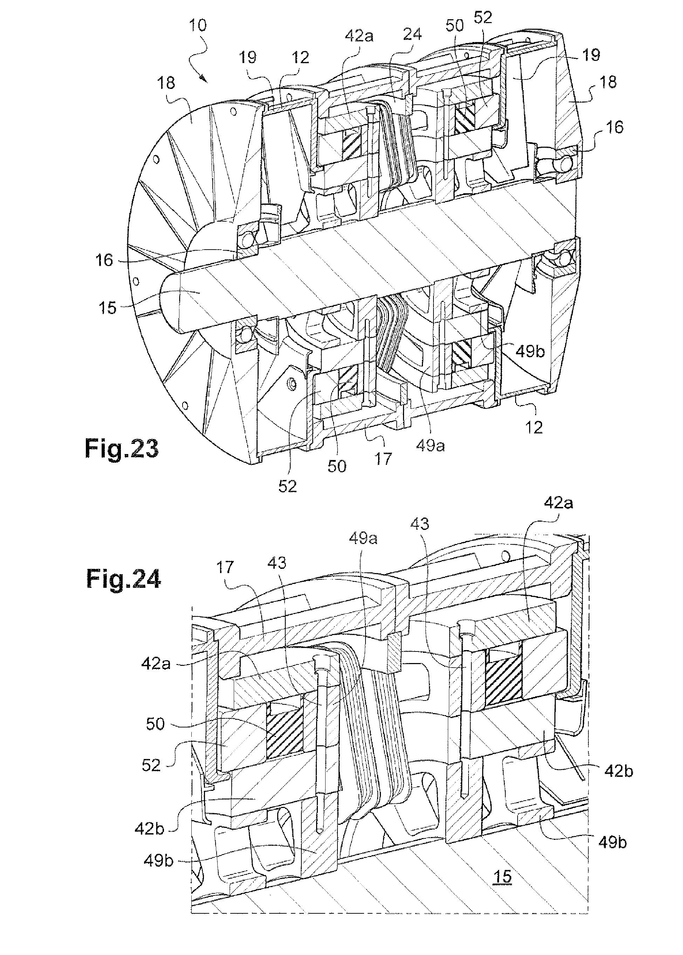

Dans une autre variante de réalisation, illustrée aux figures 22 à 24, chaque rotor 40 comporte des perçages 43 traversant à la fois les deux armatures rotoriques cylindriques 42a et 42b et les deux ossatures coaxiales 49a et 49b, afin de recevoir des vis de maintien amagnétiques permettant de renforcer la cohésion des rotors 40.

On va maintenant décrire le fonctionnement de la machine. Le courant circulant dans les bobines d'excitation 50 des rotors 40 et la rotation des griffes 44 de ces rotors créent un flux magnétiques circulant dans l'un des rotors puis dans le stator, à savoir dans les dents 21 de ce dernier selon un axe sensiblement parallèle à l'axe de rotation de la machine, avant de circuler dans le deuxième rotor situé de l'autre côté du stator. Dans un rotor, le flux circule des griffes d'une polarité donnée, qui sont attachées à l'une des armatures rotoriques coaxiales 42a, dans cette armature rotorique coaxiale 42a, dans l'anneau ferromagnétique 52, avant de revenir vers l'autre armature rotorique coaxiale 42b puis dans les griffes de l'autre polarité, qui sont attachées à cette autre armature rotorique coaxiale 42b.

Bien entendu, l'invention n'est pas limitée aux exemples de réalisation qui viennent d'être décrits.

On peut notamment multiplier le nombre de stators.

L'expression « comportant un » doit être comprise comme étant synonyme de « comprenant au moins un ».

## Revendications

1. Machine électrique tournante (10) comportant au moins un stator (20) et au moins deux rotors (40), lesquels sont disposés de part et d'autre du stator (20) le long d'un axe de rotation (X) de la machine,
- ledit au moins un stator (20) comportant des dents (21) et des bobinages (22) disposés sur les dents, et
- chacun desdits au moins deux rotors (40) comportant deux armatures rotoriques coaxiales (42a, 42b) l'une avec l'autre, portant chacune des griffes (44) disposées pour venir interagir magnétiquement avec les dents (21) du stator, les griffes d'une armature étant disposées circonférentiellement en alternance avec les griffes de l'autre armature,
le flux magnétique étant orienté dans l'entrefer ménagé entre le rotor et le stator selon une direction sensiblement parallèle à l'axe de rotation de la machine, les dents (21) du stator (20) étant chacune de forme générale sensiblement prismatique.

2. Machine électrique tournante selon la revendication précédente, dans laquelle les dents (21) du stator (20) comportent, en section transversale prise perpendiculairement à l'axe de rotation de la machine, deux portions de cercles concentriques (21a, 21 b) reliés par deux rayons (21c).

3. Machine électrique tournante selon l'une quelconque des revendications précédentes, dans laquelle les dents (21) du stator (20) sont rattachées à une armature statorique annulaire (24).

4. Machine selon la revendication précédente, dans laquelle les dents du stator portent chacune deux bobinages (22) disposés sur la dent correspondante de part et d'autre de l'armature statorique annulaire (24), chacun des deux bobinages faisant face à l'un des deux rotors (40).

5. Machine selon l'une quelconque des revendications précédentes, dans laquelle chacun des rotors (40) comporte en outre une bobine d'excitation toroïdale (50) disposée entre les deux armatures rotoriques cylindriques et coaxiales (42a, 42b).

6. Machine selon la revendication précédente, dans laquelle la bobine d'excitation (50) est fixe par rapport au stator (20).

7. Machine selon l'une des deux revendications précédentes, dans laquelle chacun des rotors (40) comporte en outre un anneau ferromagnétique fixe (52) disposé de manière à être traversé radialement par le flux magnétique inducteur.

8. Machine selon la revendication précédente, dans laquelle chacun des rotors (40) comporte deux entrefers rotoriques auxiliaires (48), chacun des entrefers rotoriques auxiliaires étant ménagé respectivement entre l'anneau ferromagnétique (52) dudit rotor et l'une des armatures rotoriques cylindriques (42a, 42b).

9. Machine selon l'une quelconque des revendications précédentes, dans laquelle chacune des armatures cylindriques (42a, 42b) d'un rotor comporte un nombre de griffes (44) égal à la moitié du nombre de pôles de la machine.

10. Machine selon l'une quelconque des revendications précédentes, dans laquelle les deux rotors (40) entourant le stator (20) sont angulairement décalés l'un par rapport à l'autre.

11. Machine selon l'une quelconque des revendications précédentes, comportant un arbre (15) solidaire des rotors (40), lequel repose par au moins un palier (16), notamment un ou deux paliers, sur un carter de la machine, notamment un ou deux flasque(s) (18) d'extrémité de la machine.

12. Machine électrique tournante, comportant plusieurs machines selon l'une quelconque des revendications précédentes, constituées chacune d'un stator (20) et de deux rotors (40), disposées sur un axe de rotation commun (X).

13. Machine selon la revendication précédente, comportant trois machines constituées chacune d'un stator et de deux rotors disposées sur un axe de rotation commun, dans lequel les bobinages des stators sont triphasés, avec une phase par stator.

14. Machine selon l'une quelconque des revendications précédentes, constituant un moteur.

15. Machine selon l'une quelconque des revendications 1 à 13, constituant un générateur.
